Europäisches Patentamt

(19) European Patent Office

Office européen des brevets

(11) Publication number: **0 027 308**
**B1**

(12) **EUROPEAN PATENT SPECIFICATION**

(45) Date of publication of patent specification: 24.10.84

(51) Int. Cl.³: **G 01 B 7/00,** G 01 B 1/00, G 01 D 5/12, H 01 F 1/04

(21) Application number: 80302815.8

(22) Date of filing: 15.08.80

(54) Manufacture and use of magnetic scale systems.

(30) Priority: 16.08.79 JP 103602/79
17.08.79 JP 104040/79
17.08.79 JP 105441/79

(43) Date of publication of application:
22.04.81 Bulletin 81/16

(45) Publication of the grant of the patent:
24.10.84 Bulletin 84/43

(84) Designated Contracting States:
DE FR GB IT

(56) References cited:
DE-A-2 158 571
DE-A-2 531 517
DE-A-2 805 508
DE-A-2 928 060
DE-U-7 923 662
GB-A-2 025 460
US-A-3 806 336
US-A-3 954 519
US-A-4 171 978

Patents Abstracts of Japan, Vol. 3, No. 2, 13
January 1979, page 30E83

(73) Proprietor: INOUE-JAPAX RESEARCH
INCORPORATED
5289 Aza Michimasa Nagatsudamachi Midoriku
Yokohamashi Kanagawaken (JP)

(72) Inventor: Inoue, Kiyoshi
3-26-8 Kamiyoga Setagayaku
Tokyo (JP)

(74) Representative: Saunders, Harry
SAUNDERS & DOLLEYMORE 2 Norfolk Road
Rickmansworth Hertfordshire WD3 1JH (GB)

Courier Press, Leamington Spa, England.

## Description

The present invention relates to magnetic scale systems for measuring linear or angular displacements which can be a basis for positioning a movable part, e.g. a tool or workpiece, in a machine tool, for example and to a method of preparing a magnetic scale body to be used with a magnetic sensing head in such a system. More particularly, the invention relates to a magnetic scale system comprising a scale body and a magnetic sensing head, the scale body being in the form of a thin, flat object (e.g. band or disk) of a magnetic material successively magnetized to form thereon successive adjacent magnetic scaling units (i.e. magnetic gratings or markings), each consisting of a pair of opposed magnetic poles (i.e. N pole and S pole), along a preselected elongated zone thereof (e.g. along a straight strip on or in the band or along a circular or ring-shaped strip on or in the disk), the magnetic sensing head being displaceable relative to the scale body for successively sensing the magnetic scale units thereon. The present invention also relates to methods of making and utilising such magnetic scale systems and their constituent parts.

A magnet scale system commonly, makes use of a scale body or carrier in the form of a band or disk composed of a magnetic material. The band or disk is successively permanently magnetized along a preselected elongated zone thereof to form successive magnetic scaling units, which are also called magnetic gratings or markings, by scanning that zone with a "recording" magnetic head. The successive scaling units are thus formed by magnetization along a straight strip zone on one flat surface of the band-form carrier or scale body or along a circular strip zone on one flat surface of the disk-form carrier or scale body as the recording head juxtaposed with the one flat surface is displaced in a scanning manner relative to the body. The scaling units or magnetic poles are then aligned in a plane on that one flat surface.

In Utility Model JP—A—54-7668 there is described an improved magnetic scale system in which each magnetic scaling unit is formed across the thickness of a thin, flat band-form or disk-form carrier or scale body by magnetization across the thickness thereof, the successive magnetic scaling units being generated along a preselected straight strip zone in the band carrier or along a preselected circular strip zone in the disk carrier as the recording magnetic head with their magnetic pole pieces arranged to place the thickness of the carrier or scale body therebetween is displaced relative to the latter. This form of magnetic scale systems is designed to obtain an increased value of magnetic flux density per area, thereby an increased value of so-called S/N ratio (signal/noise ratio).

Regardless of types of magnetic scale systems described attempts have been made heretofore to compose a scale body of a magnetic composition such as copper-nickel-iron alloys or ferrite composition which has been recognized to possess a higher residual flux density. Attempts have also been made to employ a suitable alloying method to impart to a given composition a greater residual flux density in an effort to obtain an increased flux density per area in the scale body. Further attempts to this end are to give considerations on the size and configuration of the scale body. In spite of these efforts, however, the conventional magnetic scale systems are characterized by unsatisfactorily low flux density per area. Significantly, there have been severe limitations in the S/N ratio and the density of magnetic scaling units that can be obtained so that the noise immunity and the sensing resolution are undesirably low.

It is, accordingly, an important object of the present invention to provide an improved magnetic scale system having an increased surface flux density or magnetic flux density per area, an increased S/N ratio, an increased scaling density, an increased immunity to noise and an increased sensing resolution.

In accordance with the present invention there are provided a method of preparing a magnetic scale body, a magnetic scale body and a magnetic scale system as claimed in claims 1, 15 and 19 respectively.

The magnetic material forming the scale body is preferably an iron-chromium-cobalt base spinodal decomposition type magnetic material described, for example, in US—A—3,806,336, 3,954,519 and 4,171,978 assigned to the present applicant.

The scale body composed of a spinodal decomposition type magnetic alloy can be rendered magnetically anisotropic prior to magnetization. In general, a spinodal decomposition type magnetic alloy body is rendered magnetically anisotropic by subjecting the alloy subsequent to solutioning, to an aging or tempering heat treatment procedure in a magnetic field.

The magnetic material forming the scale body is preferably rollable or plastically workable so that the body can be shaped into a desired form, e.g. a thin band or disk, of a thickness of the order of a fraction of a millimeter or up to several mm, preferably about 1 mm. The iron-chromium-cobalt base spinodal decomposition magnetic alloys which have a satisfactory rollability are particularly advantageous to this end.

Specifically, a cast body of permanent magnetic material which is known to be rollable or plastically workable and also to be capable of being rendered magnetically anisotropic upon a subsequent treatment may first be prepared. The cast body is then rolled to a thickness of, say, 1 mm. The rolled body may then be press-cut or machined into a band or disk of a desired width and length or of a desired diameter. A solution treatment is applied to the body subsequent to rolling or press-cutting. To acquire anisotropy, the body subsequent to solutioning is subjected to a magnetic aging procedure in which the body is heated at a predetermined aging or tempering temperature while an external magnetic field is applied to the body. The direction of a magnetic field is critical and should be such as to develop an axis of easy magnetization in alignment of desired magnetic poles constituting each scaling unit. Thus, the magnetic field is applied, preferably in the direction perpendicular to the two parallel surfaces of the shaped thin band or disk to develop an axis of easy magnetization in the direction of the thickness of the band or disk but may be in the direction parallel to those flat surfaces to develop an axis of easy magnetization parallel to the latter. The magnetic aging or tempering is followed by a final heat treatment or aging or tempering procedure which is preferably conducted in multiple steps at different, preferably successively decreasing temperatures. The final process step comprises magnetization of the body. Thus, a magnetization field is applied with a magnetic recording head to the body in the direction in which an axis of easy magnetization has developed during the magnetic aging or tempering procedure, the magnetic recording head being displaced relative to the body to form the successive magnetic scaling units at a preselected pitch along a preselected elongated zone on or in the body.

The magnetic scale system, of the present invention by virtue of the scale body prepared in this manner, presents a increased flux density per area or surface flux density, say, 40 or 50 to 300 Gauss or 30 to 50 Gauss. The increased flux density is especially noticeable with the perpendicular type system in which the body is rendered magnetically anisotropic to develop the axis of easy magnetization and subsequently magnetized, in a direction perpendicular to the two parallel surfaces of the scale body or in the direction of the thickness thereof. Thus, an increase in flux density per area or surface flux density by 100 to 1000 times greater than with a conventional magnetic scale system using a magnetically isotropic scale body which is simply magnetized successively on one side of the body is observed with an embodiment of the present invention. The scaling unit has practically no residual flux component in any direction other than the perpendicular direction. Furthermore, the pitch width between adjacent scaling units can readily be reduced so that the recording or marking density of units per area may be markedly increased. The S/N ratio is also improved markedly, say, by 10 times. As a consequence, there is a marked improvement in noise immunity and power of sensing resolution.

It is apparent that any intrinsically isotropic magnetic material such as copper-nickel-iron, copper-nickel-cobalt alloys and ferrite compositions which have been used commonly to form a scale body in conventional magnetic scale systems but are incapable of developing magnetic anisotropy is not suitable to form the scale body of the present invention. Further, aluminum-nickel-cobalt alloys and rare-earth compositions, despite their ability to develop anisotropy are not advantageous because of their lack of rollability.

Example
An admixture consisting by weight 2% titanium, 3% vanadium, 15% cobalt, 21% chromium and the balance iron is cast in the presence of an argon atmosphere in a high-frequency heating furnace. The cast body is solution-treated at a temperature of 1000 to 1300°C for 30 minutes. The solution-treated body is rolled to a thickness of 1 mm and then press-cut to a desired shape. The solution-treatment may be conducted subsequent to or between these rolling and press-cutting stages. When the solution-treatment is conducted subsequent to the rolling stage, any magnetic anisotropy which may undesirably be imparted to the body (with an axis of easy magnetization which develops in the rolling direction) during that stage is substantially removed.

The magnetic aging or tempering stage for imparting the desired magnetic anisotropy to the shaped body makes use of an external magnetic field of 3000 to 4000 Oersteds which is applied to the body while the latter is held at an aging temperature of 630 to 690°C for a period of 30 to 60 minutes, say, at 670°C for 30 minutes. The magnetic field is applied to the body in a direction perpendicular to the two parallel surfaces or in parallel with the thickness thereof.

The body which has been rendered magnetically anisotropic is then subjected to a multiple step aging or tempering procedure in the absence of a magnetic field and thus held at 620°C for 1 hour, 600°C for 1 hour, 560°C for 1 hour and 540°C for 4 hours.

The resulting body develops, in the direction perpendicular to the two parallel surfaces or in parallel with the thickness thereof, residual flux density of 14,500 Gauss, a coercive force of 520 Oersteds and a maximum energy product of $5.8 \times 10^6$ Gauss.Oersted.. In the direction parallel to the two parallel surfaces or perpendicular to the thickness thereof, the body presents substantially no permanent magnetism.

The same body in the form of a band or disk of a thickness of 1 mm is formed with successive magnetic markings or scaling units at an interval or pitch of 50 to 100 microns by perpendicular magnetization with a magnetic recording head which applies a magnetizing magnetic field in the thickness of the body. Each scaling unit consists of a pair of N and S poles which develop across the body thickness, the N and S poles being alternately formed on each of the two parallel surfaces of the body along a preselected straight or circular strip zone thereof. The scale body or each scaling unit is found to provide a surface flux density of 410 Gauss and is substantially immune to external noise.

In the foregoing solution-treatment and the subsequent magnetic aging or tempering steps, preferably, a plurality of disk-form or band-form bodies each individually constituting a desired scale body are stacked one upon another and then subjected to solutioning and magnetic aging or tempering. This procedure rather than treating them one after another is advantageous to avoid bending or curving of such thin bodies during these heating steps. The cutting procedure may be performed in this manner as well and may make use of, rather than pressing, any other suitable process such as wire-cutting EDM, electron-beam machining or laser machining.

It is apparent that the magnetic material has a sufficient aging resistance as regards desired magnetic characteristics. It is possible to apply a corrosion-resistant, wear-resistant or lubrication coating or toughness-imparting layer such as of a resin to one or both of the flat surfaces of the scale body prepared in the manner so far described.

The magnetic recording and/or sensing head may comprise a first magnetic yoke adapted to magnetically connect together a pair of portions of adjacent magnetic markings or magnetic markings spaced apart with a preselected number of intermediate markings on one flat surface of the scale body and a second magnetic yoke having an energizing or sensing coil and adapted to magnetically connect together such a pair of portions of magnetic markings on the other flat surface of the scale body.

Several embodiments of the magnetic scale system according to the present invention will be described hereinafter in conjunction with unique manners of use thereof, reference being made to the accompanying drawings.

Fig. 1 is a schematic view illustrating an embodiment of the magnetic scale system according to the invention;

Figs. 2A and 2C are waveform diagrams illustrating operations of a booster coil shown in Fig. 1, a portion of the scale body being shown at Fig. 2B;

Fig. 3 is a diagrammatic view illustrating an embodiment of the sensing head according to the present invention;

Fig. 4 is a diagrammatic view of another embodiment of the magnetic scale system for the explanation of a vernier circuit according to the invention;

Fig. 5 is a circuit diagram of the vernier circuit according to the invention;

Fig. 6 is a diagrammatic view illustrating another embodiment of the sensing head according to the present invention;

Fig. 7 is a schematic diagram illustrating a further form of the system according to the invention;

Figs. 8(T1) and (T2) are schematic diagrams illustrating how magnetic marking signals are formed on main and an auxiliary tracks, respectively, on a magnetic scale body;

Figs. 9 and 10 are diagrammatic views illustrating a modified form of the magnetic sensing head system; and

Fig. 11 is a diagrammatic view illustrating still another embodiment of the invention.

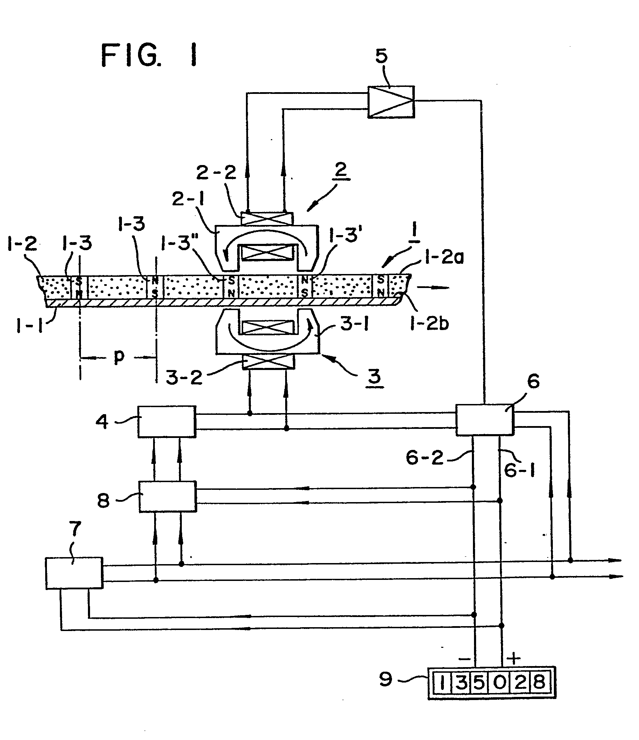

Referring first to Fig. 1, a magnetic tape 1 comprises a magnetic membrane 1-2 constituting the scale body hereinbefore described and a tough base or carrier film 1-1. On the membrane 1-2 there are formed successive magnetized scale units or markings 1-3 with a pitch $p$. The markings 1-3 have been magnetized in opposed directions alternately as shown so that S and N poles are alternately formed on one side surface 1-2$a$ of the magnetic membrane 1-2 and N and S poles are alternately formed on the other side surface 1-2$b$ of the membrane 1-2.

A sensing head includes a reading coil unit 2 comprising a yoke 2-1 and a coil 2-2 and a booster coil unit 3 comprising a yoke 3-1 and a coil 3-2. In this embodiment, the yoke 2-1 and the yoke 3-1 are of a same configuration and size and are arranged in mutually mirror image positions with respect to the magnetic tape 1. The distance between legs of each of the yokes 2-1 and 3-1 is here $p$ but may be arranged to be $Np$ where N is an integer.

Assume that the magnetic tape 1 is advancing in the direction of the arrow. As will be apparent hereinafter an inversion takes place in the direction of energization for the booster coil unit 3 each time the magnetic tape 1 has advanced by one pitch $p$. As a consequence, the magnetic force acting between these magnetic markings 1-3' and 1-3" interposed between the reading coil unit 2 and the booster coil unit 3 is constantly enhanced.

In the position shown, the magnetic field in the magnetic circuit constituted by the pair of yokes 2-1 and 3-1 and the pair of magnetic markings 1-3' and 1-3" is oriented anti-clockwise. When the magnetic tape advances one pitch from the position shown, the orientation of the field is switched to the clockwise sense.

In the position shown, the flux density of the yoke 2-1 has reached a maximum and the sensing coil 2-2 has therefore the output voltage equal to nil and its differential equal to a maximum.

A processing circuit 6 is provided to analyze information derived from the voltage and its differential of the sensing coil 2-2, the polarity of a power supply 4 and a control circuit 7 for issuing an output pulse from the output terminals 6-1 or 6-2, depending upon the direction in which the markings pass, at each instant of the passage and thereby permitting an up/down counter 9 to count up its display.

The output pulse of the processing circuit 6 is also fed to a supply polarity control circuit 8 to reverse the polarity of the output of the power supply 4.

Referring to Fig. 2, the output pulse is furnished from the processing circuit 6 when the yoke 3-1 before advancing to a position 3-1' has reached a mid position 3-1" relative to the magnetic tape 1 (Fig. 2B) and then the energizing current for the booster coil 3-2 is switched as shown in Fig. 2A.

Thus, this embodiment provides a much greater sensing output than the case in which no booster coil unit 3 is used.

This embodiment is extremely convenient where the magnetic tape is fed at a constant rate of displacement.

Where the displacement of the magnetic tape is indefinite as regards its rate and direction and thus random and sudden displacements are encountered, it is advantageous to keep the booster coil unit 3 energized with a DC supply. This enables a highly accurate tape reading. Thus, the sensing coil 2-2 then provides an intensified output each time the magnetic tape 1 displaces two pitches 2p and, in the intermediate zone, furnishes a very weak output. Another method is to energize the booster coil 3 with a high-frequency AC while the yoke relative to markings is lying in the intermediate region shown at 3-1" in Fig. 2B. The energizing current is compared with the voltage induced at the sensing coil 2 as regards their phases and amplitudes to determine the position of the magnetic marking relative to the yoke and its polarity so that the output voltage of the power supply 4 may be controlled as shown in Fig. 2c, for example.

In any case, the magnetic force is intensified up to near the level corresponding to the maximum flux density when a magnetic marking is entering between the two yokes, thus permitting the sensing coil to develop a very intense output signal.

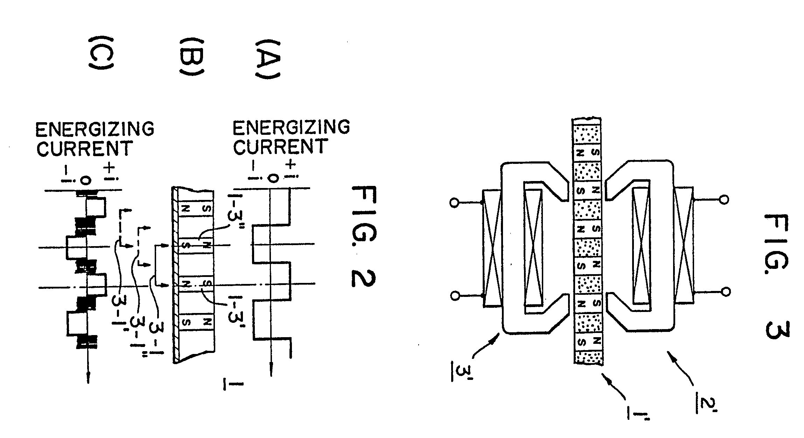

Fig. 3 shows a high-resolution sensing head embodying the present invention. In this Figure the sensing coil unit 2' and a booster coil unit 3' are shown as having a greater inter-leg distance than the sensing coil unit 2 and the booster coil unit 3 of Fig. 1. Actually, however, no such enlargement is necessary and on the contrary magnetic markings applied on the tape 1' are possibly spaced apart with a distance reduced by one third to one fifth and thus are possibly applied with an increased density per area.

The sensing head of Fig. 3 is adapted for energization by the circuit of Fig. 1 to operate in the same manner as the head of Fig. 1.

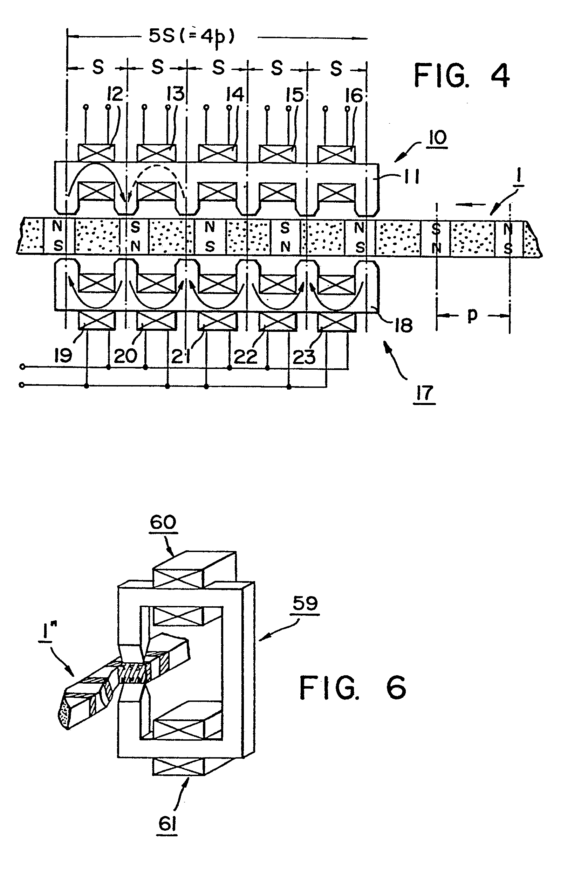

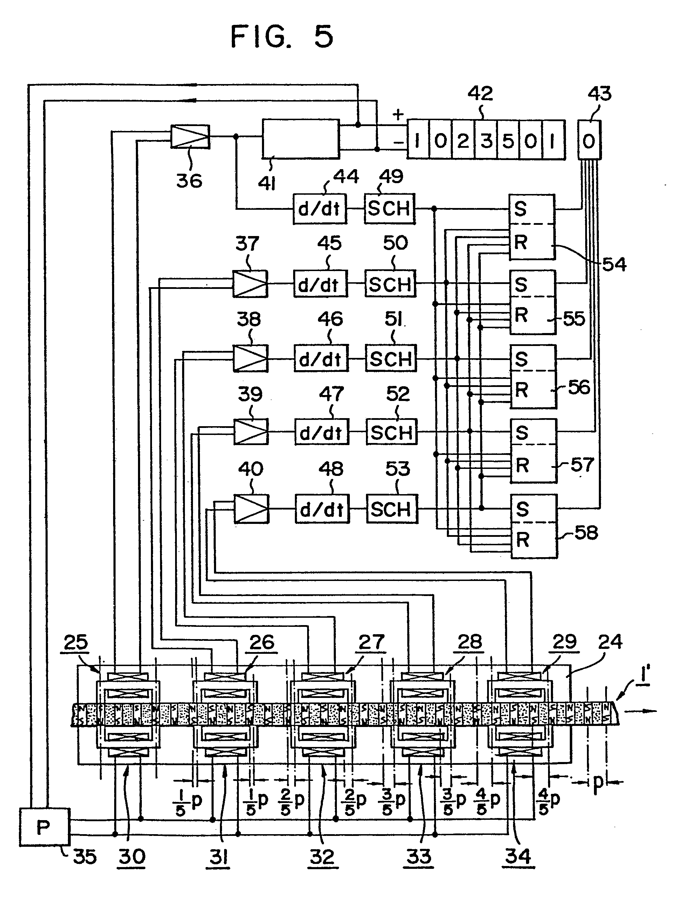

The systems shown in Figs. 4 and 5 are designed to achieve an increased sensing resolution in magnetic scaling by using the vernier principle. In Fig. 4, a sensing coil unit 10 is shown comprising a six-pole yoke 11 and five sensing coils 12, 13, 14, 15 and 16 operative in engagement therewith and a booster coil unit 17 is shown comprising a six-pole yoke 18 and five energizing coils 19, 20, 21, 22 and 23 operative in engagement therewith.

The magnetic tape is displaced in the direction of the arrow and the coils 19 to 23 are energized individually in the same manner as the coil 3-2 in Fig. 1.

In this embodiment, the interpole pitch or distance S of each of the six-pole yokes 11 and 18 is designed to be equal to four-fifths (4/5) of the pitch $p$ of the magnetic markings. This enables a resolution of 0.2p to be obtained.

Thus, in the position shown, that portion of the yoke 10 which has the sensing coil 12 wound thereon is arranged to provide the highest flux density and the sensing coil 12 is adapted to provide the output voltage equal to nil and its differential equal to the maximum.

When the tape 1 advances 0.2p from the position shown, that portion of the yoke 10 corresponding to the sensing coil 13 falls to be greatest magnetized. The greatest magnetized portion then shifts to the portions of coils 14, 15 and 16 in sequence each time the magnetic tape displaces 0.2p, and eventually returns to the portion of coil 12. During the course of repetitions of this cycle, the outputs of these coils provide a precision sensing of the positions of magnetic markings on the tape at a resolution of 0.2p.

In Fig. 5, the sensing coil and booster coil are each separated into five independent units. In this embodiment, when a sensing coil 25 and a booster coil 30 have their respective yoke legs accurately juxtaposed with any given pair of magnetic markings as shown, the yoke legs of a sensing coil 26 and a booster coil 31 lie shifted by 1/5 p from the proximate magnetic markings. The amount of this shift is equal to 2/5 p with a sensing coil 27 and a booster coil 32, 3/5 p with a sensing coil 28 and a booster coil 33 and 4/5 p with a sensing coil 29 and a booster coil 34.

Assuming that the magnetic tape 1' is advancing in the direction of the arrow, the yoke of the coil 25 is greatest magnetized. A differential circuit 44 then has its output built up to a peak level and a Schmitt trigger circuit 49 is triggered to bring a bistable element 54 into its set state, while bringing other bistable elements 55, 56, 57 and 58 into their reset states. A numerical display 43 thus indicates the numeral 0.

As the magnetic tape 1' advances in the direction of the arrow, it is apparent that the display 43 changes its numerical indication from 0 to 2, 4, 6 and 8 in sequence, depending upon the amount of displacement of the magnetic tape 1'.

In this figure, a power supply 35 energizes the booster coils 30 to 34 individually. A preamplifier 36 is connected between the sensing coil 25 and a processing circuit 41 which is connected to an up/down counter 42. The processing circuit 41 and the up/down counter 42 are similar to those shown in Fig. 1. Further preamplifiers 37, 38, 39 and 40 amplify signals from the sensing coils 26, 27, 28 and 29, respectively and feed into differential circuits 45, 46, 47 and 48, respectively. Schmitt trigger circuits 50, 51, 52 and 53 are responsive to the outputs of the differential circuits 45, 46, 47 and 48, respectively and are connected as shown to bistable elements 55, 56, 57 and 58 which are led together to the numerical display 43.

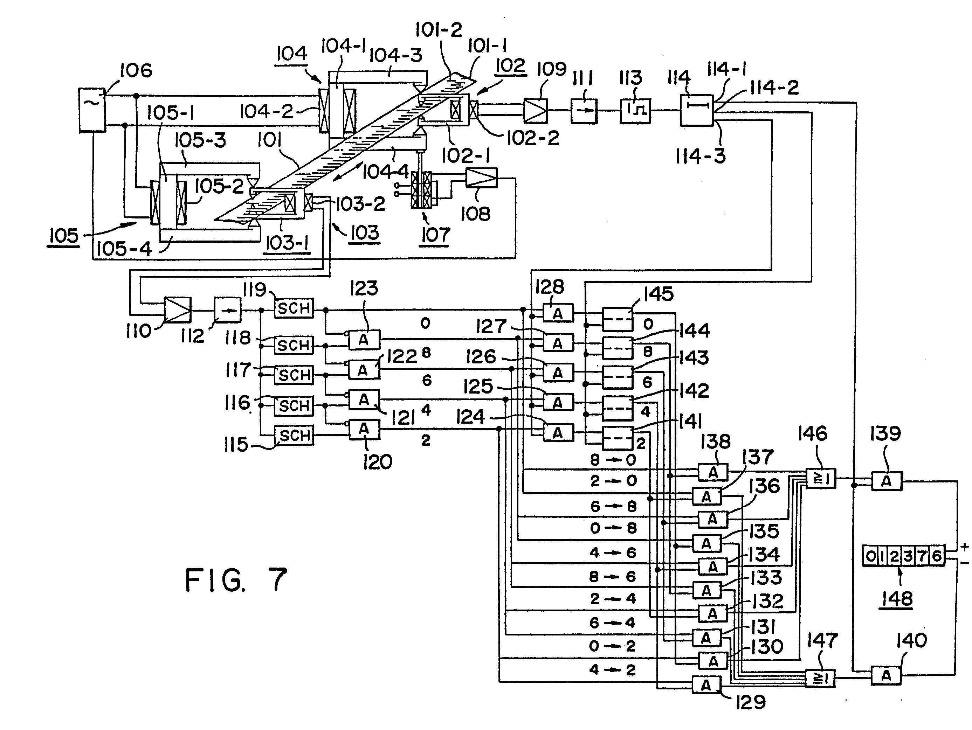

Fig. 6 shows a further embodiment of the magnetic scale system according to the invention in which the sensing coil 60 and the booster coil 61 are wound on a common yoke 59 having a pair of legs juxtaposed with a magnetic tape 1″ on the two opposite sides thereof.

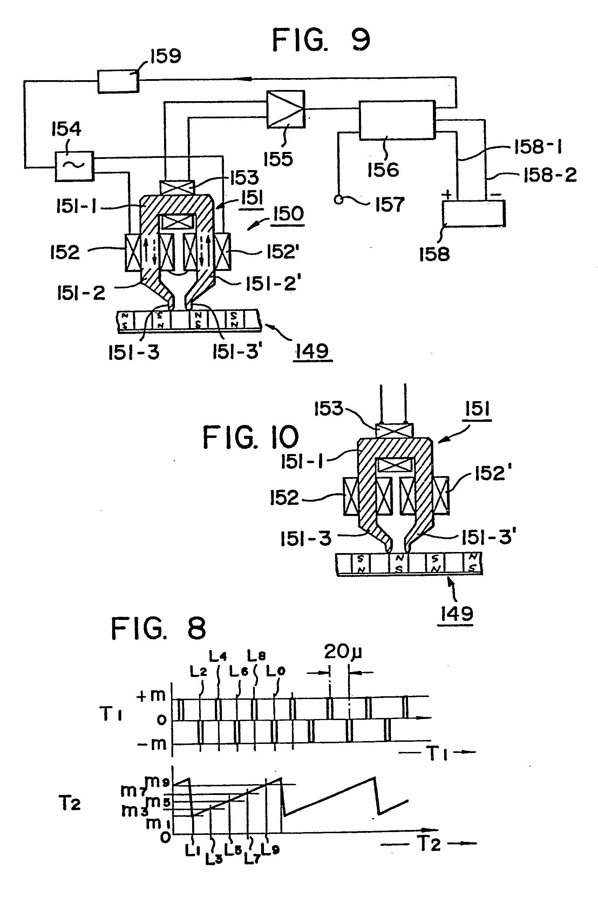

In another magnetic scale system shown in Fig. 7, a magnetic tape 101 is formed with two tracks 101-1 and 101-2 having equally spaced magnetic markings T1 and saw-tooth markings T2 formed thereon, respectively, as shown in Fig. 8. The pitch of the markings T1 is, for example, 20 microns and then the pitch of the markings T2 is, for example, 100 microns.

Sensing heads 102 and 103 comprise yokes 102-1 and 103-1, and coils 102-2 and 103-2, respectively and include mechanical vibrators 104 and 105, respectively. The vibrators 104 and 105 comprise magnetostrictive, electrostrictive or piezoelectric elements 104-1 and 105-1; coils 104-2 and 105-2; fixed arms 104-3 and 105-3, and vibratile arms 104-4 and 105-4, respectively.

The fixed arm 104-3 and the vibratile arm 104-4 are composed of a nonmagnetic material and their respective one ends are welded to the two opposite ends of the vibrator element 104-1, respectively. The fixed arm 104-3 is securely mounted on a suitable support structure not shown. The two legs or arms of the yoke 102-1 of the head 102 are securely inserted between the free ends of the fixed arm 104-3 and the vibratile arm 104-4 while the base of the yoke 102-1 is securely mounted on a suitable support structure not shown so that its arm portions may be freely vibrated.

One end of the vibratile arm 104-4 is coupled to an armature of a linear differential transformer 107. The amplitude of the vibratile arm 104-4 is detected by the differential transformer 107. The signal detected by the differential transformer 107 is transmitted via a servo amplifier 108 and fed back to a high-frequency power supply 106 whose output voltage is thereby controlled to maintain the vibrational amplitude of the arm 104-4 substantially constant.

The vibrator 105 has essentially the same construction as the vibrator 104. The yoke 103-1 of the head 103 is securely supported by and between the fixed arm 105-3 and the vibratile arm 105-4.

The spacing between the yokes 102-1 and 103-1 is arranged to be equal to $n$ times the pitch of the saw-tooth markings on the track T2 where n is an integer and preferably 1.

When the output of the high-frequency power supply 106 is supplied to coils 104-2 and 105-2, the magnetostrictive or piezoelectric elements 104-1 and 105-1 bring about vibrations in their longitudinal directions and act to vibrate the yokes 102-1 and 103-1 via the vibratile arms 104-4 and 105-4, respectively. These vibrations cause dynamic changes in the air gaps between the tape 101 and the yoke 102-1 and between the tape 101 and the yoke 103-1 and result in the inductive generation at each of coils 102-2 and 103-2 of a high-frequency AC of an amplitude which depends on the intensity of magnetization of the tape 101 interposed between these yokes.

The tape 1 is advanced in the direction of arrow by a drive unit not shown. When a magnetic marking positions itself between the sensing arms of the yoke 102-1, the coil 102-2 provides a maximum output. The magnetic markings are magnetized in opposite directions alternately. Thus, an inversion takes place in the output phase of the coil 102-2 for each passage of marking but this has no essential influence on the operation of the system.

The output signal of the coil 102-2 is fed via a preamplifier 109 and a rectifier/smoothing circuit 111 to a monostable element 113. The output of the coil 102-2, the gain of the preamplifier 109 and the triggering level of the monostable element 113 are arranged so that when the coil 102-2 has a peak output, the monostable element can only then be triggered.

Accordingly, when any marking formed on the track 101-1 of the tape 101 enters between the detection arms of the yoke 102-1, the monostable element 113 is triggered to provide a short output pulse.

On the other hand, the head 103 senses the saw-tooth markings formed on the track 101-2 as the tape 101 is advanced.

Thus, the output of the coil 103-2 fluctuates in amplitude to provide a saw-tooth wave signal as the tape 101 is advanced.

This output signal is applied via a preamplifier 110 and a rectifier/smoothing circuit 112 to Schmitt trigger circuits 115 to 119.

The triggering levels $E_{115}$, $E_{116}$, $E_{117}$, $E_{118}$ and $E_{119}$ of the Schmitt trigger circuits 115, 116, 117, 118 and 119 are set to the voltages which develop at the output of the rectifier/smoothing circuit 112 when the intensity of magnetization of the tape 101 interposed between the detection arms of the yoke 103-1 equals $m_1$, $m_3$, $m_5$, $m_7$ and $m_9$, respectively.

Accordingly, when the portion of the tape 101 which corresponds to the section $L_1$—$L_3$ shown at Fig. 8(T2) enters between the detection arms of the yoke 103-1, only the Schmitt trigger circuit 115 is triggered to bring the output of an AND gate 120 into the state ″1″.

When the portion of the section $L_3$—$L_5$ enters, the Schmitt trigger circuits 115 and 116 are triggered to bring the output of the AND gate 120 into the state "0" while bringing the AND gate 121 output into the "1" state. Similarly, when the portions of the sections $L_5$—$L_7$ and $L_7$—$L_9$ enter, the Schmitt trigger circuits 117 and 118 are triggered in sequence and the AND gates 122 and 123 are switched to alter their states to "1". In the section $L_9$ to peak P point, all the Schmitt triggers 116 to 119 are triggered and all the AND gates 120 to 123 have the "0" output.

On the track 101-1 there are formed magnetic markings $L_2$, $L_4$, $L_6$, $L_8$ and $L_0$, as shown at Fig. 8(T1), which correspond to the mid points of the sections $L_1$—$L_3$, $L_3$—$L_5$, $L_5$—$L_7$ and $L_7$—$L_9$, respectively.

Accordingly, when the AND gates 120, 121, 122 and 123 and the Schmitt trigger circuit 119 take the "1" output state, the head 102 effectively senses the markings $L_2$, $L_4$ $L_8$ and $L_0$, respectively.

Assume that the head 102 senses the marking $L_8$, for example. Then the Schmitt trigger circuit 119 and the AND gates 120 to 122 provide the "0" output while only the AND gate 123 provides the "1" output. In this state, a delay circuit 114 is operated by the output of the monostable element 113 and issues short output pulses from its output terminals 114-1, 114-2 and 114-3 in sequence. The second of these pulses issuing from the output terminal 114-2 acts to bring RS bistable elements 141 to 145 into a reset state. The third short output pulse issuing from the terminal 114-3 is fed to AND gates 124 to 128. This third pulse is passed through the AND gate 127 only and thereby brings an RS bistable element 144 into the set state. The mark $L_8$ which has just been sensed is thus recorded. In this state, the AND gates 129 to 138 all remain to provide the "0" output.

The tape 101 continues to be advanced in the positive direction and, when the section $L_9$—p enters between the detection arms of the head 103, the Schmitt trigger circuit 119 is triggered. This causes the AND gate 123 to furnish the "0" output and the AND gate 138, hence the OR gates 146 to furnish the "1" output. In this state, the head 102 senses the marking $L_0$ and the first short pulse issuing from the output terminal 114-1 of the delay circuit 114 is applied via the AND gate 139 to the "up" input terminal of an up/down counter 148. Subsequently, the second pulse from the output terminal 114-2 causes the RS bistable element 144 to be reset. The third pulse from the output terminal 114-3 causes the RS bistable element 145 to be set.

As long as the tape 101 continues to be advanced in the positive direction, the aforementioned cycle repeats and the number of the magnetic markings sensed by the head 102 is incrementally counted by and registered at the up/down counter 148.

Assume next that the tape 101 is advanced in the negative direction. In this case, none of AND gates 130, 132, 134, 136 and 138 will have the "1" output and only one of AND gates 129, 131, 133, 135 and 137 will be allowed to provide the "1" output. Accordingly, the first output pulse of the delay circuit 114 is disabled to pass through the AND gate 139 and is only allowed to pass through the AND gate 140 and to reach the "down" input terminal of the up/down counter 148.

In the circuit of this embodiment, it is apparent that in spite of the possibility that any given marking may be twice detected by reason of reversal of advance directions of the tape 101 and consequently that the monostable element 113 may be triggered, the output of the latter will never enter the up/down counter 148.

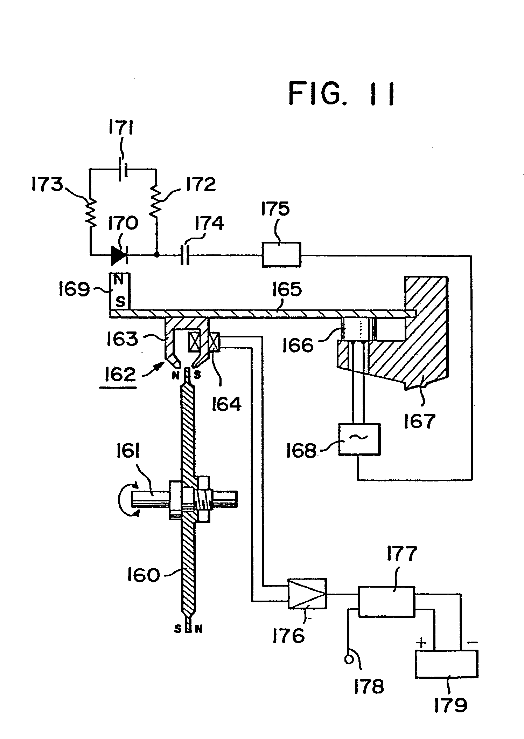

Figs. 9 and 10 show a modified form of the sensing head shown in Figs. 1, 3, 6 and 7. In Fig. 9, a magnetic tape constituting the scale body prepared in the manner described hereinbefore is designated at 149. A sensing head 150 comprises a yoke 151 and a sensing coil 153 wound thereon. The yoke 151 has a base core 151-1 and a pair of legs 151-2 and 151-2' whose respective ends 151-3 and 151-3' are juxtaposed with the magnetic tape 149 across air gaps of a minute equal length. The sensing coil 153 is connected via a preamplifier 155 to a processing circuit 156 which has another input terminal 157 for receiving signals representing directions of displacement of the magnetic tape 149, the signal being derived from a circuit not shown. The two output terminals of the processing circuit 156 are connected to the "up" input terminal 158-1 and the "down" input terminal 158-2 of an up/down counter 158. The processing circuit 156 is an equivalent to a combination of rectifier/smoothing circuits 111 and 112 through AND circuits 139 and 140 shown in Fig. 7.

In this system as well as in that of Fig. 7, means for vibrating the sensing head at a high frequency is additionably provided. This means is shown comprising a pair of coils 152 and 152' wound on the two legs 151-2 and 151-2', respectively, of the yoke 151 which is composed of a high-permeability magnetostrictive material. The coils 152 and 152' are energized in unison by a high-frequency power supply 154 to produce a high-frequency mechanical vibration of the yoke legs 151-2 and 151-2'. The magnetic fields generated by these energized coils are cancelled from each other at all times in the base core portion 151-1 of the yoke 151 so that the coil 153 is free from any sensible current due to these magnetic fields.

The synchronized high-frequency vibration of the yoke legs 151-2 and 151-2' causes abrupt changes in the length in their air gaps with the magnetic tape 149. Accordingly there is produced an intensified difference in the current that is induced through the sensing coil 153 between the case in which there is a "magnetic marking" between the two detection leg ends 151-3 and 151-3' as shown in Fig. 9 and the case in which there is no "magnetic marking" between them as shown in Fig. 10. By virtue of this intensified difference in the sensing current, the measurement of the displacement of the scale 149 is achieved with a greatly increased precision. The high-frequency power supply 154 is controlled by a control circuit 159 in response to the output of the processing circuit 156 so that the output signals of the sensing coil 153 may be held below a preset upper limit and/or above a preset lower limit.

A further embodiment of the present invention shown in Fig. 11 makes use of a magnetic disk 160 constituting the scale body prepared in the manner described hereinbefore. The disk 160 is rotated on a shaft 161 and is thus displaced relative to a sensing head 162 comprising a yoke 163 and a sensing coil 164 wound on one leg portion thereof. The sensing coil 164 is connected via a preamplifier 176 to a processing unit 177 which is in turn connected to an up/down counter 179 as previously described. An input terminal 178 to the processing unit 177 is here again shown to supply signals representing directions of movement (angular) which are derived from a sensing circuit not shown.

Means is here again provided for imparting a high-frequency mechanical vibration to the sensing head and comprises a vibratile member 165 attached to the base of the yoke 163. The member 165 is vibrated by an oscillating element 166 carried on a support 167 and energized by high-frequency power supply 168 to oscillate the head 162, here in a direction perpendicular to the magnetization of markings on the magnetic tape 160. A permanent magnet 169 is also attached to the vibratile member 165 at the free end thereof and is used, in conjunction with a magnetic diode 170, to detect the amplitude of the vibration of the sensing head 162. The magnetic diode 170 is connected to a DC supply 171 via resistors 172 and 173 and is rendered conductive to develop a voltage across the resistor 172 each time it is approached by the permanent magnet 169. The voltages are accumulated on an integrating capacitor 174 which is connected to a control circuit 175 which in turn feeds into the high-frequency power supply 168. The function of the control circuit 175 is to respond to a change in the amplitude of vibration of the sensing head 162 indicated by the level of the integrating voltage on the capacitor 174 and to control the output voltage of the power supply 168 so as to maintain the vibrational amplitude at a preset value.

There is thus provided an improved magnetic scale system which is markedly superior in resolution and immunity to external noises to conventional systems.

It will be understood that the magnetic scale system of the invention can be used in a digital encoder system as well for encoding a linear or angular displacement of a movable part, wherein the scale body forms an encoded track or can be used as a basis of the desired encoding of a displacement of interest. In such a system, a substantially identical sensing head may be utilized to convert a linear or angular displacement to digital (pulse) signals and a substantially identical counter unit may be employed for representation of the encoded displacement in the form of a numerical display or in any other form for control purposes.

**Claims**

1. A method of manufacturing a magnetic scale body (1) to be used with a magnetic sensing head (2) in a magnetic scale system wherein said scale body is in the form of a thin, flat object (1-2) of a magnetic material having discrete, successive and uniformly spaced magnetic scaling units (1-3) along a preselected elongate zone thereof. said magnetic scaling units each individually consisting of opposed magnetic poles (N, S) arranged across the thickness of the scale body on the two opposed, substantially parallel and flat surfaces (1-2a; 1-2b) thereof, said successive pairs of opposed magnetic poles alternate in their magnetic polarities, and said magnetic sensing head (2) is displaceable relative to said scale body (1) for successively sensing said discrete scaling units thereon, the method being characterised by the following steps: (a) forming a blank body of said material in said form; (b) rendering said blank body magnetically anisotropic at least in a region thereof destined to constitute said preselected zone, so as to develop in said blank body axes of hard magnetisation which are orientated in parallel with said flat surfaces (1-2a; 1-2b) thereof; and thereafter (c) magnetising said body successively so as to produce said successive pairs of magnetic poles thereon which pairs have their individual axes of magnetisation extending substantially parallel to one another and each substantially perpendicular to said developed axes of hard magnetisation but successively alternate in their magnetic polarities, whereby to produce said units on said body.

2. A method according to Claim 1, wherein step (b) is carried out by heating said blank body at an aging temperature in a magnetic field which is orientated in a direction substantially perpendicular to said flat surfaces.

3. A method according to Claim 2, wherein step (a) is carried out by: (d) preparing a cast body of said material; (e) rolling said cast body to obtain a desired thickness of said blank body; and (f) cutting said rolled body to obtain the remaining dimensions of said blank body, the method further including the step of (g) heat-treating said body resulting from step (b) at at least one aging temperature in the absence of a magnetic field, prior to step (c).

4. A method according to Claim 3, wherein step (a) further includes (h) solution-treating said body prior to step (b).

5. A method according to Claim 4, wherein step (h) is carried out immediately subsequent to step (e).

6. A method according to Claim 4, wherein step (h) is carried out immediately subsequent to step (f).

7. A method according to Claim 3 or 4, wherein step (g) is carried out at successively decreasing aging temperatures.

8. A method according to Claim 3 or 4, wherein in step (f) the rolled body is cut into a plurality of pieces each individually constituting said blank body, and said pieces are then stacked one upon another and subjected to step (b).

9. A method according to Claim 8 as dependant upon Claim 4 wherein said pieces stacked one upon another are subjected to step (h) prior to step (b).

10. A method according to any one of Claims 3 to 9, wherein said cast body is rolled to a thickness ranging between a fraction of a millimetre and several millimetres.

11. A method according to Claim 10, wherein said thickness is about 1 mm.

12. A method according to any one of Claims 1 to 11, wherein in step (c) said rendered body is magnetised by juxtaposing therewith a magnetic recording head capable of producing a magnetisation field and relatively displacing said recording head and said body so as to form said successive scaling units at a preselected pitch ranging between 50 and 100 $\mu$m along said preselected zone.

13. A method according to Claim 12, wherein the magnetic field applied in step (b) has an intensity ranging between 3000 and 4000 Oersteds (2387 to 3183 A/cm).

14. A method according to any one of the preceding claims, wherein said magnetic material is composed of an iron-chromium-cobalt base spinodal decomposition type alloy.

15. A magnetic scale body prepared by the method according to any one of the preceding claims, and having a surface flux density in excess of 30 Gauss (3 mT).

16. A magnetic scale body according to Claim 15, wherein said surface flux density is in excess of 50 Gauss (5 mT).

17. A magnetic scale body according to Claim 15 or 16, and being in the form of a band.

18. A magnetic scale body according to Claim 15 or 16 and being in the form of a disk.

19. A magnetic scale system comprising a magnetic sensing head (2) and a scale body prepared by the method according to any one of Claims 1 to 14, wherein said scale body is in the form of a thin, flat object (1-2) of a magnetic material having discrete, successive and uniformly spaced magnetic scaling units (1-3) along a preselected elongate zone thereof, said magnetic scaling units each individually consisting of opposed magnetic poles (N,S) arranged across the thickness of the scale body on the two opposed, substantially parallel and flat surfaces (1-2a; 1-2b) thereof, and said successive pairs of opposed magnetic poles alternate in their magnetic polarities, wherein said magnetic sensing head (2) is displaceable relative to said scale body (1) for successively sensing said discrete scaling units thereon.

20. A system according to Claim 19, further comprising means (104, 105) for vibrating said sensing head (102, 103) in an operation of sensing said scale body (101).

21. A system according to Claim 20, wherein said means (104, 105) is adapted to vibrate said sensing head (102, 103) in a direction substantially coincident or in parallel with said axes of magnetisation of said scaling units.

22. A system according to Claim 20, wherein said means (165 to 168) is adapted to vibrate said sensing head (162 to 164) in a direction substantially perpendicular to said axes of magnetisation of said scaling units.

23. A system according to Claim 19, wherein said sensing head (2, 3) comprises a pair of sensing head units (2, 3), one (3) of said units being energised by a power supply (4) for applying an auxiliary magnetic field to said scaling units (1-3).

## Patentansprüche

1. Verfahren zur Herstellung eines magnetischen Skalenkörpers (1), der in einem magnetischen Skalensystem in Verbindung mit einem magnetischen Nehmerkopf (2) verwendet wird, bei welchem der Skalenkörper die Form eines dünnen, flachen Bauteils (1-2) hat, der aus magnetischem Werkstoff besteht und längs eines bestimmten länglichen Bereichs mit separaten, aufeinander folgenden und dabei in gleichmäßigen Abständen voneinander liegenden magnetischen Skaleneinheiten (1-3) versehen ist, wobei jede einzelne dieser magnetischen Skaleneinheiten einander entgegengesetzt liegende Magnetpole (N,S) aufweist, die, durch die Dicke des Skalenkörpers hindurch gehend, an dessen beiden einander entgegengesetzten, zueinander parallelen und flachen Oberflächen (1-2a; 1-2b) angeordnet sind, und aufeinander folgende magnetische Polpaare hinsichtlich ihrer Magnetisierungsrichtung wechseln, während der magnetische Nehmerkopf (2) relativ zum Skalenkörper (1) verschiebbar ist, damit die einzelnen darauf befindlichen Skaleneinheiten nacheinander abgetastet werden, wobei das Verfahren durch folgende Verfahrensschritte gekennzeichnet ist: (a) der Skalenkörper-Rohling wird aus dem vorgenannten Werkstoff in der vorgenannten Form gebildet; (b) der Rohling wird wenigstens in einem Teil, der den bestimmten länglichen Bereich bilden soll, magnetisch anisotrop gemacht derart, daß im Rohling Achsen bleibender Magnetisierung entstehen, die parallel zu den flachen Oberflächen (1-2a; 1-2b) des Rohlings orientiert sind; danach wird (c) der Skalenkörper nacheinander magnetisiert derart, daß auf ihm aufeinander folgende magnetische Polpaare entstehen, deren jeweilige Magnetisierungsachsen parallel zueindander und jeweils rechtwinklig zu den bleibenden Magnetisierungsachsen verlaufen, dabei jedoch hinschtlich der Magnetisierungspolarität nacheinander wechseln, um die Skaleneinheiten auf dem Skalenkörper zu bilden.

2. Verfahren nach Anspruch 1, dadurch gekennzeichnet, daß der Verfahrenssschritt (b) durch Erwärmen des Rohlings bei Alterungstemperatur in einem Magnetfeld ausgeführt wird, welches in Richtung rechtwinklig zu den flachen Flächen orientiert ist.

3. Verfahren nach Anspruch 2, dadurch gekennzeichnet daß der Verfahrensschrit (a) wie folgt ausgeführt wird: (d) Herstellung eines Gußkörpers aus dem vorgenannten Werkstoff; (e) Walzen des Gußkörpers, damit sich die gewünschte Dicke des Rohlings ergibt; und (f) Zuschneiden des gewalzten Gußkörpers, damit sich die übrigen Abmessungen des Rohlings ergeben, wobei das Verfahren weiterhin, und zwar vor Ausführung des Verfahrensschritts (c), den Verfahrensschrit (g) der sich aus Verfahrensschritt (b) ergebenden Wärmebehandlung des Rohlings bei wenigstens einer bestimmten Alterungstemperatur in Abwesenheit eines Magnetfeldes umfaßt.

4. Verfahren nach Anspruch 3, dadurch gekennzeichnet, daß der Verfahrensschritt (a), und zwar vor Ausführung des Verfahrensschritts (b), auch (h) das Lösungsglühen des Rohlings umfaßt.

5. Verfahren nach Anspruch 4, dadurch gekennzeichnet, daß der Verfahrensschritt (h) unmittelbar nach dem Verfahrensschritt (e) ausgeführt wird.

6. Verfahren nach Anspruch 4, dadurch gekennzeichnet, daß der Verfahrensschritt (h) unmittelbar nach dem Verfahrensschritt (f) ausgeführt wird.

7. Verfahren nach Anspruch 3 oder 4, dadurch gekennzeichnet, daß der Verfahrensschritt (g) bei allmählich abnehmenden Alterungstemperaturen ausgeführt wird.

8. Verfahren nach Anspruch 3 oder 4, dadurch gekennzeichnet, daß im Verfahrensschritt (f) der gewalzte Gußkörper in eine Anzahl von Stücken zugeschnitten wird, deren jedes einen Rohling bildet, und daß diese Stücke dann aufeinander gestapelt und dem Verfahrensschritt (b) unterworfen werden.

9. Verfahren nach Anspruch 8 in dessen von Anspruch 4 abhängiger Form, dadurch gekennzeichnet, daß die aufeinander gestapelten Stücke dem Verfahrensschritt (h) vor dem Verfahrensschritt (b) unterworfen werden.

10. Verfahren nach einem oder mehreren der Ansprüche 3 bis 9, dadurch gekennzeichnet, daß der Gußkörper bis auf eine Dicke gewalzt wird, die zwischen Bruchteilen eines Millimeters und mehreren Millimetern liegt.

11. Verfahren nach Anspruch 10, dadurch gekennzeichnet, daß die Dicke ungefähr 1 mm beträgt.

12. Verfahren nach einem oder mehreren der Ansprüche 1 bis 11, dadurch gekennzeichnet, daß im Verfahrensschritt (c) der behandelte Körper magnetisiert wird, indem ihm ein magnetischer Aufnahmekopf gegenüber gestellt wird, der ein Magnetisierungsfeld erzeugen kann, und indem der Aufnahmekopf und der Körper relativ zueinander verschoben werden, sodaß sich die aufeinander folgenden Skaleneinheiten in vorbestimmter Teilung ergeben, welche längs des bestimmten Bereichs zwischen 50 und 100 $\mu$m liegt.

13. Verfahren nach Anspruch 12, dadurch gekennzeichnet, daß das im Verfahrensschritt (b) angewandte magnetische Feld eine magnetische Feldstärke zwischen 300 und 4000 Oerstedt (2387 bis 3183 A/cm) hat.

14. Verfahren nach einem oder mehreren der Ansprüche 1 bis 13, dadurch gekennzeichnet, daß der magnetische Werkstoff aus einer Legierung auf Eisen-Chrom-Kobalt-Basis mit spinodaler Zersetzung zusammengesetzt ist.

15. Magnetischer Skalenkörper, gekennzeichnet durch die Herstellung nach dem Verfahren gemäß einem oder mehreren der Ansprüche 1 bis 14, und mit einer Oberflächen-Flußdichte von mehr als 30 Gauss (3 mT).

16. Magnetischer Skalenkörper nach Anspruch 15, dadurch gekennzeichnet, daß die Oberflächen-Flußdichte mehr als 50 Gauss (3 mT) beträgt.

17. Magnetischer Skalenkörper nach Anspruch 15 oder 16, dadurch gekennzeichnet, daß er die Form eines Bandes hat.

18. Magnetischer Skalenkörper nach Anspruch 15 oder 16, dadurch gekennzeichet, daß er die Form einer Scheibe hat.

19. Magnetisches Skalensystem, bestehend aus einem magnetischen Nehmerkopt (2) und aus einem magnetischen Nehmerkopf (2) und sprüche 1 bis 14 hergestellten Skalenkörper, dadurch gekennzeichnet, daß der Skalenkörper in Form eines dünnen, flachen Bauteils (1-2) aus magnetischem Werkstoff mit längs eines bestimmten länglichen Bereichs separaten, aufeinander folgenden und in gleichmäßigen Abständen voneinander liegenden magnetischen Skaleneinheiten (1-3) ausgebildet ist, deren jede aus einander entgegengesetzt liegenden magnetischen Polen (N,S) besteht, die quer über die Dicke des Skalenkörpers hinweg an dessen beiden einander entgegengesetzten parallelen und flachen Oberfläche (1-2a; 1-2b) gelegen sind, wobei die aufeinander folgenden Paare von einander entgegengesetzt liegenden magnetischen Polen hinsichtlich ihrer magnetischen Polaritäten wechseln, und wobei der magnetische Nehmerkopf (2) relativ zum Skalenkörper (1) verschiebbar ist und die darauf befindlichen separaten Skaleneinheiten nacheinander abtastet.

20. System nach Anspruch 19, gekennzeichnet durch Einrichtungen (104, 105), welche den Nehmerkopf (102, 103) beim Abtasten des Skalenkörpers (101) in Vibration versetzen.

21. System nach Anspruch 20, dadurch gekennzeichnet, daß die Einrichtungen (104, 105) den Nehmerkopf (102, 103) in einer Richtung in Vibration versetzen, die mit den Magnetisierungsachsen der Skaleneinheiten praktisch zusammen fällt bzw. parallel dazu ist.

22. System nach Anspruch 20, dadurch gekennzeichnet, daß die Einrichtungen (165 bis 168) den Nehmerkopf (162 bis 164) in einer Richtung in Vibration versetzen, die praktisch rechtwinklig zu den Magnetisierungsachsen der Skaleneinheiten liegt.

23. System nach Anspruch 19, dadurch gekennzeichnet, daß der Nehmerkopf (2, 3) aus zwei Nehmerkopf-Einheiten (2, 3) besteht, von denen eine (nämlich 3) von einer Stromquelle (4) gespeist wird, um ein Hilfs-Magnetfeld auf die Skaleneinheiten (1-3) zu legen.

**Revendications**

1. Procédé de fabrication d'un corps (1) matérialisant une graduation magnétique destinée à être utilisée, avec une tête de lecture magnétique (2), dans un système de graduation magnétique, dans lequel le corps matérialisant la graduation est réalisé sous la forme d'un objet mince et plat (1-2), en une matière magnétique, présentant des unités de graduation magnétique (1-3) discrètes, successives et espacées uniformément le long d'une zone allongée prédéterminée de cet objet, chacune de ces unités de graduation magnétique consistant individuellement en des pôles magnétiques opposés (N,S) disposés en travers de l'épaisseur du corps matérialisant la graduation, sur les deux surfaces opposées (1-2a; 1-2b), sensiblement parallèles et planes, de ce corps, ces paires successives de pôles magnétiques opposés présentant des polarités magnétiques alternées, et la tête de lecture magnétique (2) peut être déplacée par rapport au corps (1) matérialisant la graduation pour détecter successivement les unités de graduation discrètes présentes sur le corps, caractérisé par les étapes suivantes: (a) on réalise le corps sous la forme d'un flan constitué de ladite matière magnétique; (b) on rend ce corps en forme de flan anisotrope magnétiquement au moins dans une région de ce corps destinée à constituer ladite zone prédéterminée, pour créer ainsi, dans le corps en forme de flan, des axes de magnétisation difficile qui sont orientés parallélement aux surfaces planes (1-2a; 1-2b) de ce corps; et ensuite (c) on magnétise successivement le corps de manière à produire, sur ce corps, les paires successives de pôles magnétiques, ces paires de pôles ayant leurs axes individuels de magnétisation qui s'étendent pratiquement parallélement les uns aux autres, chacun de ces axes étant sensiblement perpendiculaire aux axes de magnétisation difficile précédemment créés et les polarités magnétiques de ces axes alternant successivement, de manière à produire ainsi lesdites unités sur le corps.

2. Procédé suivant la revendication 1 caractérisé en ce que l'étape (b) est réalisée en chauffant le corps en forme de flan à une température de vieillissement dans un champ magnétique qui est orienté dans une direction sensiblement perpendiculaire aux surfaces planes.

3. Procédé suivant la revendication 2 caractérisé en ce que l'étape (a) est réalisée en: (d) préparant un corps moulé en ladite matière magnétique; (e) laminant ce corps moulé de manière à obtenir une épaisseur désirée du corps en forme de flan; et (f) découpant le corps laminé pour obtenir les dimensions finales du corps en forme de flan, le procédé comportant en outre une étape consistant à (g) traiter thermiquement le corps résultant de l'étape (b) à au moins une température de vieillissement, en l'absence d'un champ magnétique, avant de procéder à l'étape (c).

4. Procédé suivant la revendication 3, caractérisé en ce que l'étape (a) comporte en outre une phase (h) de traitement de formation de solution solide du corps avant l'étape (b).

5. Procédé suivant la revendication 3 caractérisé en ce que l'étape (h) est exécutée immédiatement après l'étape (e).

6. Procédé suivant la revendication 4 caractérisé en ce que l'étape (h) est exécutée immèdiatement après l'étape (f).

7. Procédé suivant l'une quelconque des revendications 3 ou 4 caractérisé en ce que l'étape (g) est exécutée à des températures de vieillissement allant en décroissant successivement.

8. Procédé suivant l'une quelconque des revendications 3 ou 4 caractérisé en ce qu'au cours de l'étape (f) le corps laminé est découpé en une pluralité de pièces dont chacune constitue individuellement le corps en forme de flan, et ces pièces sont ensuite empilées les unes sur les autres pour êre soumises à l'étape (b).

9. Procédé suivant la revendication 8 dépendant de la revendication 4, caractérisé en ce que les pièces empilées les unes sur les autres sont soumises à l'étape (h) avant l'étape (b).

10. Procédé suivant l'une quelconque des revendications 3 à 9 caractérisé en ce que le corps moulé est laminé de manière présenter une épaisseur allant d'une fraction de millimètre à plusieurs millimètres.

11. Procédé suivant la revendication 10 caractérisé en ce que l'épaisseur du corps est d'environ 1 mm.

12. Procédé suivant l'une quelconque des revendications 1 à 11 caractérisé en ce qu'au cours de l'étape (c) le corps rendu précédemment anisotrope du point de vue magnétique est magnétisé en juxtaposant une tête d'enregistrement magnétique capable de produire un champ de magnétisation et en déplaçant l'un par rapport à l'autre la tête d'enregistrement magnétique et le corps de manière à former les unités de graduation successives, avec un pas prédéterminé allant de 50 à 100 microns, le long de ladite zone prédéterminée.

13. Procédé suivant la revendication 12 caractérisé en ce que le champ magnétique appliqué au cours de l'étape (b) a une intensité allant de 3000 à 4000 Oersteds (2387 à 3183 A/cm).

14. Procédé suivant l'une quelconque des revendications précédentes caractérisé en ce que la matière magnétique est constituée par un alliage du type fer-chrome-cobalt à décomposition spinodale.

15. Corps matérialisant une graduation magnétique préparé par le procédé suivant l'une quelconque des revendications précédentes et ayant une densité de flux superficielle supérieure à 30 Gauss (3 mT).

16. Corps matérialisant une graduation magnétique suivant la revendication 15 caractérisé en ce que la densité de flux superficielle est supérieure à 50 Gauss (5 mT).

17. Corps matérialisant une graduation magnétique suivant l'une quelconque des revendications 15 ou 16 caractérisé en ce qu'il est réalisé sous la forme d'une bande.

18. Corps matérialisant une graduation magnétique suivant l'une quelconque des revendications 15 ou 16 caractérisé en ce qu'il est réalisé sous la forme d'un disque.

19. Système de graduation magnétique comprenant une tête de lecture magnétique (2) et un corps matérialisant la graduation préparé par le procédé suivant l'une quelconque des revendications 1 à 14, caractérisé en ce que le corps matérialisant la graduation est réalisé sous la forme d'un objet mince et plat (1-2), en une matière magnétique, présentant des unités de graduation magnétique (1-3) discrètes, successives et espacées uniformément le long d'une zone allongée prédéterminée de cet objet, chacune de ces unités de graduation magnétique consistant individuellement en des pôles magnétiques opposés (N,S) disposés en travers de l'épaisseur du corps matérialisant la graduation, sur les deux surfaces opposées (1-2a; 1-2b), sensiblement parallèles et planes, de ce corps, ces paires successives de pôles magnétiques opposés présentant des polarités magnétiques alternées, et la tête de lecture magnétique (2) peut être déplacée par rapport au corps (1) matérialisant la graduation pour détecter successivement les unités de graduation discrètes présentes sur le corps.

20. Système suivant la revendication 19 caractérisé en ce qu'il comprend des moyens (104, 105) pour faire vibrer la tête de lecture (102, 103) dans une opération de lecture du corps (10) matérialisant la graduation.

21. Système suivant la revendication 20 caractérisé en ce que les moyens (104, 105) sont adaptés de manière à faire vibrer la tête de lecture (102, 103) dans une direction qui coïncide sensiblement avec les axes de magnétisation des unités de graduation ou qui est sensiblement parallèle à ces axes.

22. Système suivant la revendication 20 caractérisé en ce que les moyens (165 à 168) sont adaptés de manière à faire vibrer la tête de lecture (162 à 164) dans une direction pratiquement perpendiculaire aux axes de magnétisation des unités de graduation.

23. Système suivant la revendication 19 caractérisé la tête de lecture (2, 3) comprend une paire d'unités de tête de lecture (2, 3), l'une de ces unités (3) étant alimentée par une source d'énergie électrique (4) pour appliquer un champ magnétique auxiliaire aux unites de graduation (1-3).

FIG. 1

# FIG. 3

# FIG. 2

(A)

(B)

(C)

FIG. 4

FIG. 6

# FIG. 5

FIG. 7

0 027 308

# FIG. 9

# FIG. 10

# FIG. 8

FIG. 11